# EUROPEAN PATENT APPLICATION

(11) **EP 2 189 368 A1**
(43) Date of publication of application: **26.05.2010**
(21) Application number: 08460044.4
(22) Date of filing: 25.11.2008
(51) Int. Cl.: B63B 1/36

(54) **Water sliding craft (wcs)**

(71) Applicant: Smialowicz, Andrzej, 87-800 Wloclawek (PL)
(72) Inventor: Smialowicz, Andrzej, 87-800 Wloclawek (PL)

(57) **Abstract**

Water sliding craft (called wsc) with its own propulsion or without its own propulsion (towed by another watercraft) consisting a protection element (6) dissecting waves, guide rollers (1) fitted to a hull bottom (3). An elastic band (4) rests on the rollers, having a possibility of moving on the guide rollers (1) without a slip. The guide roller, through the band (4), rests on a bracket with double thrust rollers (5) (figure 1 and 2). A sliding body (7) with the elastic band (4) resting on brackets (8) can be fitted to the hull (3) with protection element (6) instead of guide rollers (1) and brackets (2) and (5). The sliding body (7) includes sliding surfaces (9) which elastic band (4) move on. Water is delivered to a wedge shape void space between the body (7) and the band (4). Water goes on the band (4) and separates the sliding surface (9) and the elastic band (4) with a thin water layer during moving of the band (4) (figure 3 and 4). The sliding surface (9) can be separate from the elastic band (4) with a layer of water by another mode, delivered under pressure through holes in the lower part of the sliding body (7). The above solutions make the elastic band (4), having contact with water during wsc's movement, to move 'backward' in relation to the unit hull (3), resulting in significant decrease of friction forces of the band in water, especially with high speed of the wsc.

## Description

The object of the invention is a water sliding craft, called hereinafter wsc, with its own propulsion or without its own propulsion (wsc towed by another propelled watercraft). During wsc's movement forward a hull is emerged out of water due to hydrodynamic force acting on a surface of an elastic band, which starts to move in place of contact with water 'backward' in relation to the hull. Solutions used up till now to solve the topic of emerging hulls out of water rely on using underwater fins. A hydrofoil boat is an example.

Another way to emerge a hull out of water is an air cushion under the hull. A hovercraft is an example here. The next way is utilization of a hydrodynamic force originated on duly shaped underwater part of the hull during a movement of a watercraft. The above solutions require considerable energy consumption for friction forces or air cushion creation. Proposed wsc solutions causes considerable reduction of friction forces between band and water resulting in reduction of the energy needed for wsc's movement or increase of wsc's velocity with the same fuel consumption. The object of the invention is shown on enclosed figures.

### Construction description

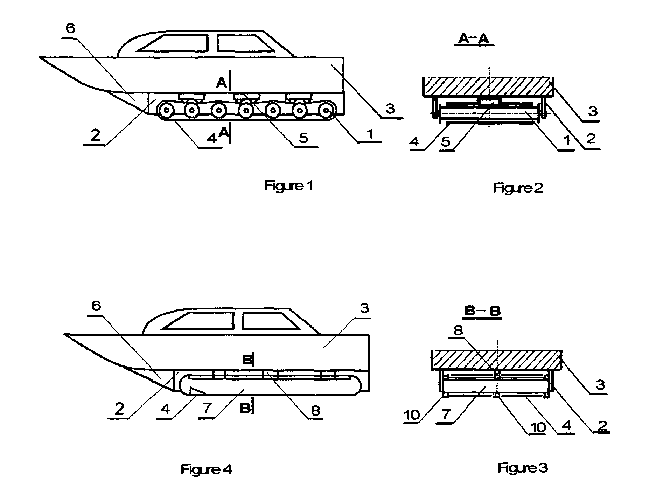

The wsc consists of a hull (3), to a bottom of which proper brackets (2) are fitted. Axes of guide rollers (1) are fitted to the brackets, while the rollers give a possibility of the band movement without a slip. The rollers' axes can be fitted to the bracket (2) - without a possibility of rotation, therefore roller raceway rotates on the axis or roller raceway rotates together with the axis, while the axis has a possibility to rotate within the bracket (2). There are collars on the rollers ends which do not allow band's (4) movement along roller axis. An elastic band (4) is placed on the guide rollers (containing, for instance, a glass fiber or a carbon fiber). The band ends are connected together to create closed circuit. The first or the last guide roller (1) serves also to band tightness regulation. To discharge the guide roller (1) of wsc's raising forces the guide roller (1) rests through the band (4) on a bracket with double thrust rollers (5). The bracket (5) is fitted to the hull bottom (3). Quantity of brackets (5) is chosen in such a way to suit the whole construction strength requirements. Front part of a rollers and band unit is secured with a protection element (6) fitted to the hull (3) bottom. Its tusk is coming waves dissection (figures 1 and 2). Another wsc's version consists of a hull (3), to which a sliding body (7) is fitted by use of brackets (2). The body rests on brackets (8), which transfer body (7) raisings forces on the hull (3) bottom during wsc's movement. Sliding body is made in a shape close to a tight rectangular prism, empty inside, with proper stiffeners and properly shaped ends of the body (7). Sliding body (7) has also slide guides (10), which are situated in the lower part of the sliding body and on its two half-round ends. The guides do not allow band (4) to move aside. Elastic band (4) creates closed circuit and has a possibility to slide itself on sliding surfaces (9) (made of a material containing, for instance, Teflon). Sliding surfaces are situated on the same surfaces as the sliding guides (10). Moving band (4) has no contact with the sliding body (7) surface in the upper part of it. Front lower part of the sliding body (7) creates with bands (4) a void space of a wedge shape, which space water is delivered to (from wsc's propulsion engine cooling system for instance). Coming to moving band (4) the water displaces itself together with the band (4), creating thin sliding layer separating the band (4) and sliding surface (9). Water separation of the sliding surface (9) and the band (4) during movement of the latter can be also secured in another way - by delivery of water under pressure through small round holes in the bottom of the sliding body (7), which pass also through the sliding surface (9).

The water is delivered to the holes by use of a pipe situated in the void space inside the sliding body (7). To divide sliding surface (9) and the band (4) ecologic grease can be used instead of water, decreasing friction and without a danger of water contamination (figure 3 and 4).

It is also possible to construct a sliding body in such a way that two bands (4) are inclined relatively one another under an angle smaller than 180 degrees. V-letter shape section bottom is created there, making easier wsc's movement on waves. It is also possible to construct wsc with two sets of bands and rollers parallel to wsc's movement direction, described in accordance to the claims 1 to 2 - in case of the flat bottom crafts or the ones having V-shaped transversal section of bottom as well. The same possibility of construction of wsc with flat bottom or with V-shaped bottom exists in case of the solution described in accordance to the claims 3 to 5, whereas it concerns design with only one elastic band and also with two or higher quantity of bands sets given in the claims 3 to 5. Wsc's designs described in the invention application might fmd application in construction of quick and fuel consumption economic sliding crafts with own propulsion - to transport of people or cargo, especially on shallow waters. It can also be sail units (sail boats, catamarans, trimarans). Water sliding crafts without own propulsion might be used as quick barges for transport of cargo, being towed by tugs, especially on shallow waters. Wsc can be also built as windsurfing or kite surfing desk and also as water ski for a water skier.

## Claims

1. Water sliding craft with its own propulsion or without its own propulsion - **characterized in that** it possess a hull (3), to which are fitted protection element (6) and brackets (2) for fitting guide rollers on which moves an elastic band (4), creating closed circuit where front or rear guide roller tighten the band. (Figure 1 and 2).

2. Water sliding craft, according to the claim 1, **characterized in that** the guide rollers (1) rest through the elastic band (4) on brackets with double thrust rollers (5), which are fitted to the hull (3) bottom of the water sliding craft (figure 1 and 2).

3. Water sliding craft with its own propulsion or without its own propulsion, **characterized in that** to the hull bottom (3) are fitted the protection element (6) and brackets (2) to which sliding body (7) is fitted, resting on brackets (8) fitted to the hull bottom (3) and whereas on the sliding body (7) there are elastic bands (4), each of them creating closed circuit (figure 3 and 4).

4. Water sliding craft, according to the claim 3, **characterized in that** the sliding body (7) is of a rectangular section, void inside, properly strengthened, with round surfaces on its ends, on which sliding guides (10) and sliding surfaces (9) are situated in the same way as in the lower part of the body (7), while in the front lower part of sliding body (7) elastic band (4) creates with sliding body a void space in a wedge shape where water is delivered to band (4) (figure 4).

5. Water sliding craft, according to the claim 3, **characterized in that** water under pressure is delivered between sliding layers (9) and elastic band (4) through round holes situated in the lower part of the sliding body (figure 4).
